# EUROPEAN PATENT APPLICATION

(11) **EP 2 063 361 A2**
(43) Date of publication of application: **27.05.2009**
(21) Application number: 08251746.7
(22) Date of filing: 19.05.2008
(51) Int. Cl.: G06F 11/20, G06F 3/06

(54) **Storage apparatus, control method therefor, and storage system**

(30) Priority: 24.10.2007 JP 2007277019
(71) Applicant: Hitachi Ltd., Chiyoda-ku Tokyo 100-8280 (JP)
(72) Inventor: Kondo, Shuji c/o Hitachi, Ltd. Intellectual Porperty Group, CHiyoda-ku, Tokyo 100-8220 (JP); Suzuki, Hidenori c/o Hitachi, LTD. Intellectual Porpery Group, Chiyoda-kU, Tokyo 100-8220 (JP)
(74) Representative: Hodsdon, Stephen James

(57) **Abstract**

An object of the invention is to provide a storage apparatus that can effectively reduce power consumption without degrading response performance, a control method therefor, and a storage system. A journal (40) (or more than one journals) that contains data volume modification history information is (are) created based on write data; the thus created journal is held in cache memory (24), or saved in a journal volume (42) when necessary; the journal held by the cache memory or saved in the journal volume is transferred to an external storage device (5), and the proportion of the cache memory used for the journal is monitored during the above processes; and the journal volume is de-activated if the proportion is not more than a predetermined first threshold value, and activated if the proportion exceeds the first threshold value.

## Description

This application relates to and claims priority from Japanese Patent Application No. 2007-277019, filed on October 24, 2007, the entire disclosure of which is incorporated herein by reference.

The invention relates generally to a storage apparatus, a control method therefor, and a storage system. For example, the invention is suitable for use in a storage apparatus having a remote copy function, and a storage system including that storage apparatus .

Conventional storage systems widely utilize a method for managing stored data by backing up data stored in data volumes, and restoring, if a failure occurs in those data volumes (including the data stored in those volumes), the data volumes to its original, pre-failure state using backup data.

The above existing backup methods for storage systems include a method transferring, when a host computer writes data to a primary data volume, journals that contain update history information about that data volume (the data itself, the addresses the data have been written to, and data-write times, etc.) from the primary data volume to a secondary data volume, and writing the same data to the same address in the secondary data volume in accordance with the journals (Japanese Patent Laid-Open Publication No. 2005-186506). With that method, a volume with exactly the same content as the content of the primary volume can be created in the secondary volume.

In recent years, greater and greater data capacity in storage apparatuses has been required. The number of storage devices built in a storage apparatus has accordingly increased, and power consumption in storage apparatuses is also increasing gradually. Storage apparatuses having a power-save mode for automatically turning off unused storage devices have recently become available.

Meanwhile, if a storage device is turned off, response performance is degraded when writing data to that storage device because it takes time to activate the device. Accordingly, when turning off storage devices to reduce power consumption, it is necessary to fully consider when to turn on/off the devices and which storage devices are turned on/off.

The invention was made in consideration of the above situation, and an object is to provide a storage apparatus in which power consumption can be efficiently reduced without degrading response performance, a control method for that storage apparatus, and a storage system.

To preferably achieve the above object, an aspect of the present invention provides a storage apparatus for providing a host computer with a data volume data is read from or written to, and writing write data to the data volume in response to a request from the host computer, the apparatus including: a journal creation unit for creating, based on the write data, a journal that contains data volume modification history information; cache memory for temporarily holding the journal; a journal volume the journal is saved in when necessary; a transfer unit for transferring, to an external storage device, the journal stored in the cache memory or saved in the journal volume; and a journal volume de-activation/activation unit for controlling de-activation/activation of the journal volume, wherein the journal volume de-activation/activation unit monitors a cache memory usage percentage for the journal, the journal volume is de-activated if the cache memory usage percentage is not more than a predetermined first threshold value, and the journal volume is activated if the cache memory usage percentage exceeds the first threshold value.

With that configuration, in the above storage apparatus, the journal volume can be activated when needed, or de-activated when not needed. Accordingly, the power consumption can be reduced.

Another aspect of the invention provides a method for controlling a storage apparatus for providing a host computer with a data volume data is read from or written to, and writing write data to the data volume in response to a request from the host computer, the method including: a first step of creating, based on the write data, a journal that contains data volume modification history information; a second step of having cache memory hold the thus created journal or saving the journal in a journal volume when necessary; and a third step of transferring, to an external storage device, the journal held by the cache memory or saved in the journal volume, wherein a cache memory usage percentage for the journal is monitored during the above first to third steps, the journal volume is de-activated if the cache memory usage percentage is not more than a predetermined first threshold value, and activated if the cache memory usage percentage exceeds the first threshold value.

With the above storage apparatus control method, the journal volume can be activated when needed, or de-activated when not needed. Accordingly, the power consumption can be reduced.

Another aspect of the invention provides a storage system in which write data written from a host computer to a first data volume in a first storage apparatus is transferred to a third storage apparatus via a second storage apparatus, and is copied to a corresponding third data volume in the third storage apparatus, the second storage apparatus comprising: cache memory for temporarily holding the write data transferred from the first storage apparatus, a second data volume provided to correspond to the first volume, and a control unit for saving the write data in the corresponding second data volume when necessary, and transferring, to the third storage apparatus, the write data held by the cache memory or saved in the second data volume, wherein the control unit de-activates the second data volume during power-save mode; and if the write data becomes unable to be transferred from the second storage apparatus to the third storage apparatus, the control unit activates the corresponding second data volume and saves, in the second data volume, the write data transferred from the first storage apparatus, and after the write data becomes able to be transferred from the second storage apparatus to the third storage apparatus, the control unit transfers the write data saved in the second data volume to the third storage apparatus and de-activates the second data volume after all the write data in the second data volume is sent to the third storage apparatus.

With that configuration, in the above storage system, the data volume in the second storage apparatus can be activated when needed, or de-activated when not needed. Accordingly, the power consumption can be reduced.

Aspects of the present invention can realize a storage apparatus in which power consumption can be efficiently reduced without degrading response performance, a control method for that storage apparatus, and a storage system.

Other aspects and advantages of the invention will be apparent from the following description and the appended claims.

### Brief Description of the Drawings

Fig. 1 is a block diagram showing the first embodiment of a storage system.

Fig. 2 is a block diagram showing a schematic configuration for a channel adapter.

Fig. 3 is a conceptual diagram illustrating remote copy in the storage system in the first embodiment.

Fig. 4 is a conceptual diagram illustrating conventional processing for storing a journal in a journal volume.

Fig. 5 is a conceptual diagram illustrating processing in the present embodiments for storing a journal in a journal volume.

Fig. 6 is a conceptual diagram illustrating a processing for activating second and subsequent journal volumes.

Fig. 7 is a flowchart showing write processing.

Fig. 8 is a conceptual diagram illustrating a data area and a journal area in cache memory.

Fig. 9 is a flowchart illustrating a processing routine for primary-side remote copy.

Fig. 10 is flowchart illustrating a processing routine for secondary remote copy.

Fig. 11 is a flowchart illustrating a processing routine for journal volume de-activation.

Fig. 12 is a flowchart illustrating a processing routine for journal volume activation.

Fig. 13 is a block diagram showing the second embodiment of a storage system.

Fig. 14 is a conceptual diagram illustrating remote copy in the storage system in the second embodiment.

Fig. 15 is a conceptual diagram illustrating remote copy in the storage system in the second embodiment.

Fig. 16 is a conceptual diagram illustrating remote copy in the storage system in the second embodiment.

Figs. 17A and 17B are conceptual diagrams illustrating remote copy in the storage system in the second embodiment.

Fig. 18 is a flowchart showing a processing routine for data volume de-activation/activation.

Embodiments of the invention will be described below with reference to the drawings.

### 1. First embodiment

### 1-1. Configuration for the storage system in this embodiment

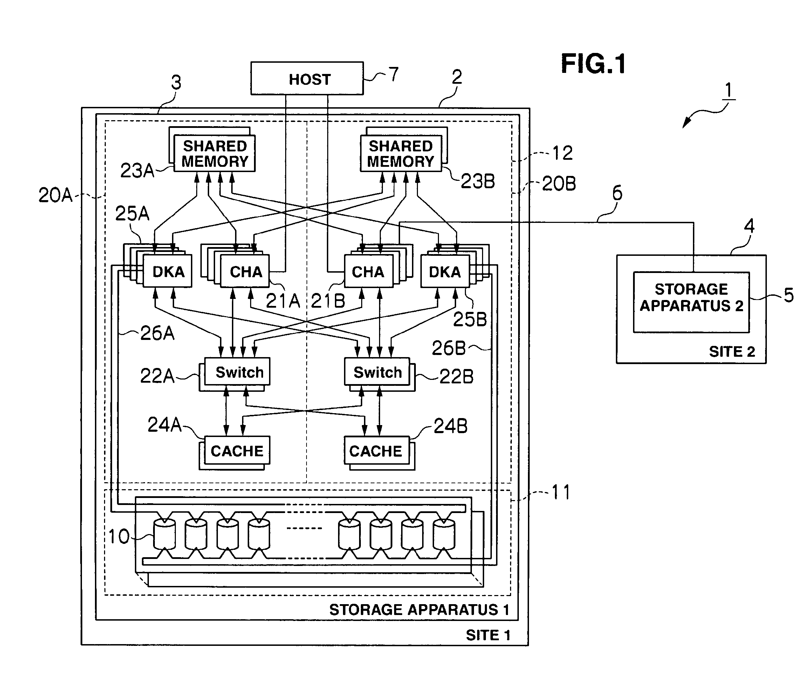

Referring to Fig. 1, reference numeral 1 represents the storage system in this embodiment in general. In the storage system 1, a first storage apparatus 3 installed in a first site 2 and a second storage apparatus 5 installed in a second site 4 are mutually connected via a communication line 6 such as a SAN (Storage Area Network), a LAN (Local Area Network), or the Internet, and the first storage apparatus 3 is connected to a host computer 7.

The host computer 7 is a computer device having information processing resources such as a CPU (Central Processing Unit) and memory, and examples of the host computer 7 include a personal computer, workstation, and mainframe. The CPU is a processor that governs the overall operation of the host computer 7. Various kinds of processing, such as data read or data write from/to the first storage apparatus 3, are executed by having the CPU execute various control programs stored in the memory.

The first storage apparatus 3 has a disk unit 11 including plural disk devices 10 and a disk controller 12 for controlling each disk device 10.

The disk devices 10 are expensive disks such as SCSI (Small Computer System Interface) disks, or inexpensive disks such as SATA (Serial AT Attachment) disks or optical disks.

The disk devices 10 are managed in a RAID method by the disk controller 12. One or more logical volumes are set in a physical storage area provided by one or more disk devices 10. Data is stored in the logical volumes in units of blocks of a predetermined size (hereinafter referred to as "logical block(s)").

Each logical volume is provided with a specific identifier (hereinafter referred to as an "LUN (Logical Unit number)"). In this embodiment, data is input/output by specifying an address, which is a combination of an LUN and a specific number provided to each logical block (LBA: Logical Block Address).

The types of logical volumes created in the first storage apparatus 3 include data volumes used by the host computer 7 to read/write data and journal volumes for temporarily storing journals, as well as other types of volumes.

The disk controller 12 has a dual-controller configuration including 0^{th} and 1^{st} control units 20A and 20B. The control unit 20A (20B) has plural channel adapters 21A (21 B), a switch 22A (22B), shared memory 23A (23B), cache memory 24A (24B), and disk adapters 25A (25B).

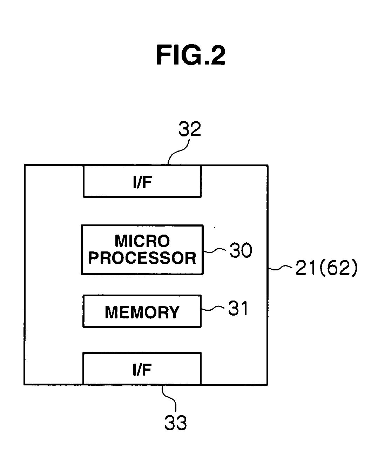

As shown in Fig. 2, each channel adapter 21A (21 B) is a microcomputer system including a microprocessor 30, memory 31, and communication interfaces 32 and 33, or similar. The channel adapter 21A (21 B) interprets various commands sent from the host computer 7 and executes relevant processing. Each channel adapter 21A (21B) is connected to the shared memory 23A (23B) and the switch 22A (22B) in the same control unit, and also connected to the shared memory 23B (23A) and the switch 22B (22A) in the other control unit. With that configuration, the channel adapter 21A (21B) can read/write necessary information from/to the shared memory 23B (23A) in the other control unit, or access, via the switch 22B (22A) in the other control unit, the cache memory 24B (24A) in the other control unit.

The switch 22A (22B) is connected to the channel adapters 21A (21 B), the cache memory 24A (24B), and the disk adapters 25A (25B). Data or commands are exchanged, via the switch 22A (22B), between the channel adapters 21A (21B), the cache memory 24A (24B), and the disk adapters 25A (25B). Examples of the switch 22A (22B) include a super high-speed cross bus switch that transmits data via high-speed switching.

The shared memory 23A (23B) and the cache memory 24A (24B) are storage memory shared by the channel adapters 21A (21B) and the disk adapters 25A (25B). The shared memory 23A (23B) is used mainly for storing commands and system configuration information about the overall configuration of the first storage apparatus 3, or similar. The cache memory 24A (24B) is used mainly for temporarily storing data input to/output from the first storage apparatus 3.

Each disk adapter 25A (25B) is a microcomputer system including a microprocessor and memory or similar, like the channel adapters 21A (21 B), and functions as an interface for controlling protocol during communication with the disk devices 10 in the disk unit 11. The disk adapter 25A (25B) is connected, via a Fibre Channel loop 26A (26B), to a corresponding disk device 10 in the disk unit 11, and exchanges data with that disk device 10. Each disk adapter 25A (25B) is connected to the shared memory 23A (23B) and the switch 22A (22B) in the same control unit, and also connected to the shared memory 23B (23A) and the switch 22B (22A). With that configuration, the disk adapter 25A (25B) can read/write necessary information from/to the shared memory 23B (23A) in the other control unit, and access, via the switch 22B (22A) in the other control unit, the cache memory 24B (24A) in the other control unit.

The second storage apparatus 5 has the same configuration as the first storage apparatus 3, so the explanation has been omitted.

### 1-2. Remote copy function in this embodiment

Next, the remote copy function in this storage system 1 will be described.

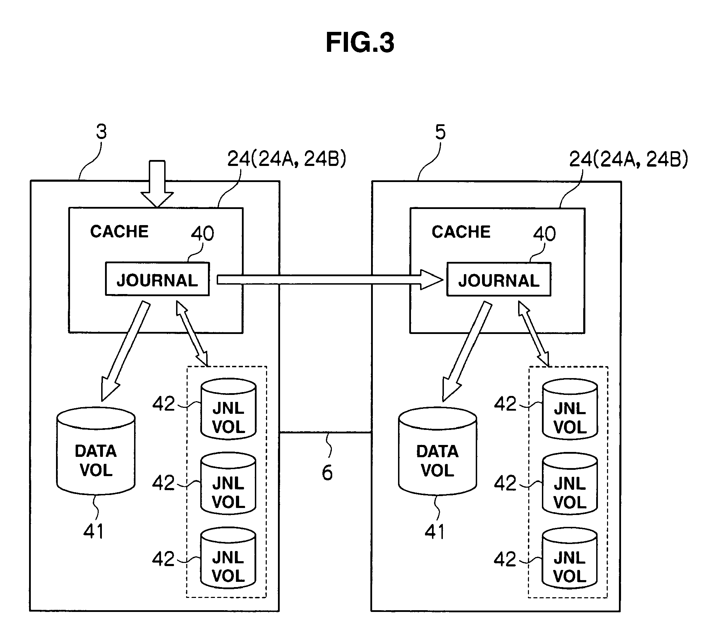

As shown in Fig. 3, when a write request and write data are given from the host computer 7 (Fig. 1) to the first storage apparatus 3 in this storage system 1, a journal 40 (or more than one journal volumes 40) for that write data is (are) create in the cache memory 24 (24A/24B) in the first storage apparatus 3.

The first storage apparatus 3 then reflects the thus created journal 40 in a relevant data volume 41 (i.e., writes the write data included in that journal 40 to a relevant location in the relevant data volume 41. The same applies to the following description.), and stores the journal 40 in a journal volume 42. The first storage apparatus 3 also reads the journal 40 stored in the journal volume 42 from that journal volume 42 according to a read request from the second storage apparatus 5, and transfers the journal 40 to the second storage apparatus 5.

The second storage apparatus 5 stores the journal 40 transferred from the first storage apparatus 3 in the journal volume 42 via the cache memory 24, reads the journal 40 from the journal volume 42 according to a serial number the journal 40 has been provided with (hereinafter referred to as a "sequence number"), and reflects the journal 40 in a relevant data volume 41 in the second storage apparatus 5.

However, with the above described method where the first storage apparatus 3 has a journal volume 42 hold the created journal 40, reads the journal 40 from the journal volume 42 in response to the read request from the second storage apparatus 5, and transfers the journal 40 to the second storage apparatus 5, response performance in the first storage apparatus 3 to a read request from the second storage apparatus 5 is degraded.

Therefore, the storage system 1 is provided with a "cache mode" remote copy operation mode, for exchanging the journal 40 between the first and second storage apparatuses 3 and 5, not, in principle, via a journal volume 42.

In actuality, if the cache mode is set, the first storage apparatus 3 does not store the above created journal 40 in the journal volume 42, but has the cache memory 24 hold the journal 40, reads, in response to a read request from the second storage apparatus 5, the relevant journal 40 from the cache memory 24, and transfers the journal 40 to the second storage apparatus 5. The second storage apparatus 5 has the cache memory 24 hold the journal 40 transferred from the first storage apparatus 3 and reflects the journal 40 in a data volume 41 according to the sequence number.

With the above described cache mode, the journal volume 42 in the first storage apparatus 3 is used only when temporarily saving journals 40 that cannot be stored in the cache memory 24 because the cache memory 24 is full, so usage frequency of the journal volumes 42 decreases. The storage system 1 is provided with a power-save mode for de-activating a journal volume 42 used in the above described state (i.e., turning off the disk device 10 that provides the storage area for the journal volume 42).

However, when all journal volumes 42 are de-activated, if a line failure or similar occurs between the first and second storage apparatuses 3 and 5 and the cache memory 24 in the first storage apparatus 3 becomes full and unable to store any more journals 40 (hereinafter that status is described as "journal 40 overflow from the cache memory 24"), journals 40 that cannot be stored may not be able to be immediately saved in a journal volume 42. In the above described power-save mode, in the first storage apparatus the percentage of journals that are actually stored in the cache memory 24 out of the journals that can be stored in the cache memory 24 (hereinafter referred to as a "cache usage percentage") is monitored, and a journal volume 42 is activated if the cache usage percentage exceeds a certain value (hereinafter referred to as "journal volume activation threshold value") .

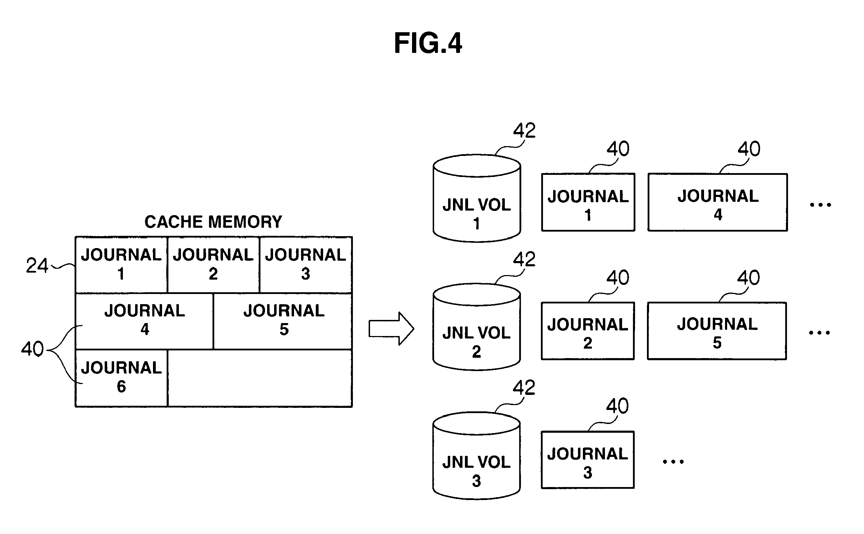

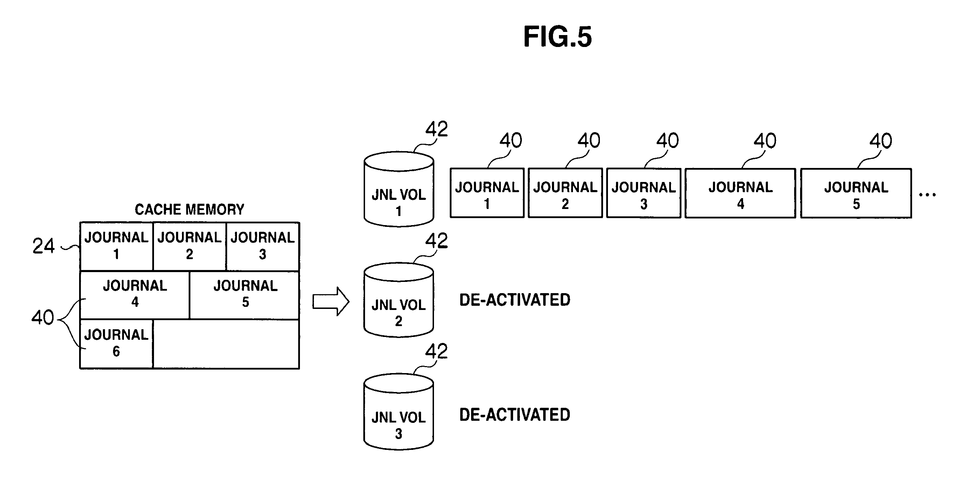

During regular operation, as shown in Fig. 4, when saving journals 40 from the cache memory 24 in the journal volumes 42, those journals 40 are dispersed over all the journal volumes 42 to improve the saving performance. Meanwhile, during the power-save mode, as shown in Fig. 5, the saving destination for the journals 40 is limited to part of the journal volumes 42 to reduce the number of disk devices to be activated.

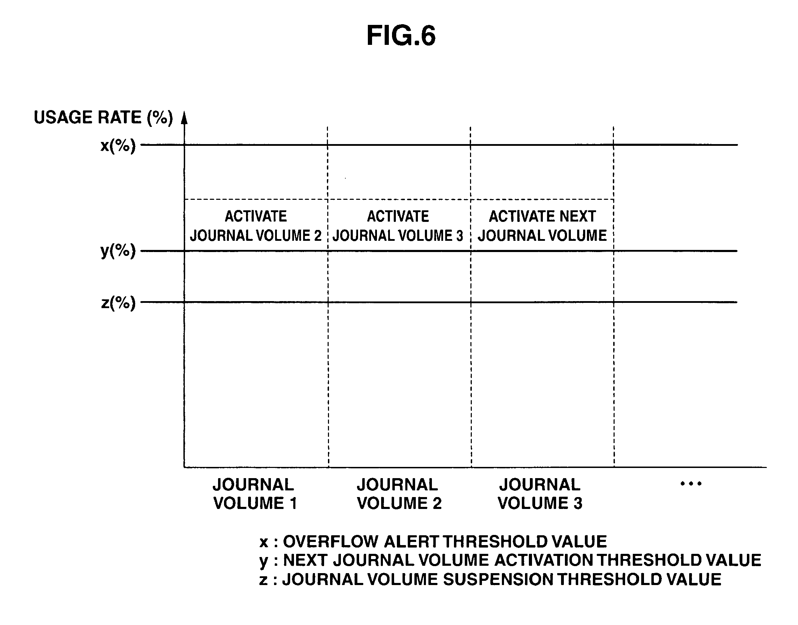

More specifically, the cache usage percentage is monitored in the first storage apparatus 3, one of the journal volumes 42 is activated if the cache usage percentage exceeds the journal volume activation threshold value, and journals 40 that overflow from the cache memory 24 are stored in the above activated journal volume 42. After that, as shown in Fig. 6, the percentage of journals actually stored in the above activated journal volume 42 out of the journals that can be stored in that journal volume 42 (hereinafter referred to as a "journal volume usage percentage") is monitored. If the journal volume usage percentage exceeds a certain value (the value represented by "y (%)" in Fig. 6, hereinafter referred to as a "next journal volume activation threshold value"), the next journal volume 42 is activated. If the journal volume usage percentage exceeds a predetermined overflow alert threshold value (the value represented by "x (%)" in Fig. 6), the saving destination for journals 40 that overflow from the cache memory 24 is shifted to the above next journal volume 42. The above process is subsequently repeated.

The order of activating the journal volumes 42 (hereinafter referred to as "activation priority") is determined in advance by a user or a system designer, and that information is stored in the shared memories 23A and 23B (Fig. 1). Serial numbers provided to the journal volumes 42 may be used as the activation priority. In that case, the journal volume 42 with a smaller sequence number has a higher activation priority.

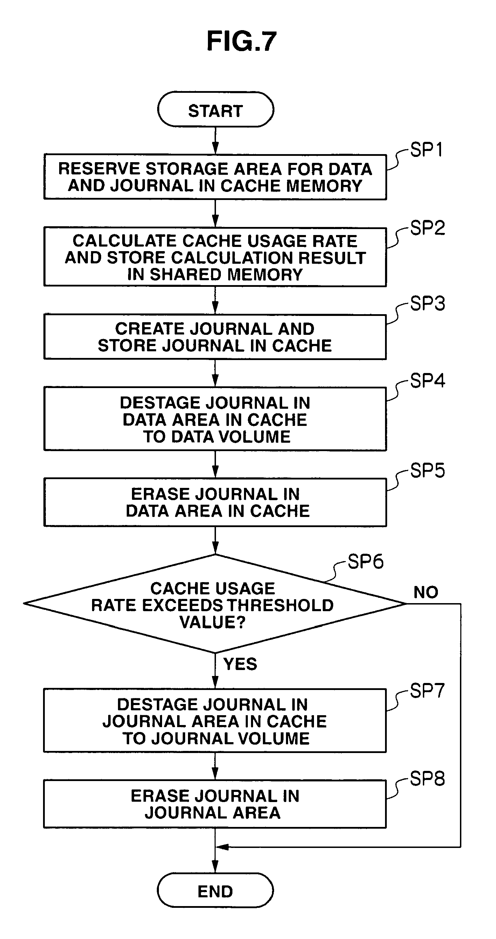

Fig. 7 shows the specific content of processing for the above described remote copy function, processing executed by the microprocessor 30 (hereinafter referred to as a "primary microprocessor 30") in each channel adapter 21A (21B) (Fig. 1) in the first storage apparatus 3 when receiving a write request and write data sent from the host computer 7. The primary microprocessor 30 executes the write processing shown in Fig. 7 according to a relevant control program stored in the memory 31 (Fig. 2).

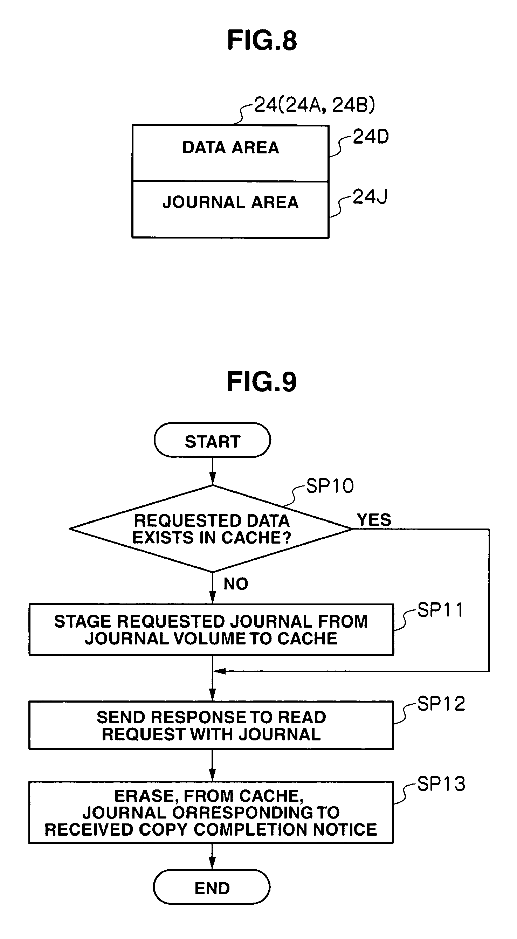

More specifically, the primary microprocessor 30 commences the write processing after receiving the write request and write data sent from the host computer 7, and first reserves storage areas for the data volume 41 and the journal volume 42 in the cache memory 24 (24A/24B) (SP1). In this embodiment, as shown in Fig. 8, storage areas in the cache memory 24 in both the first storage apparatus 3 and the second storage apparatus 5 are either data areas 24D or journal areas 24J, so the number of segments corresponding to data length of the relevant write data is reserved in the data area 24D and the journal area 24J.

After that, the primary microprocessor 30 calculates a cache memory 24 usage percentage for the journal area 24J (i.e., the above mentioned cache usage percentage) after reserving the storage areas in step SP1. More specifically, the primary microprocessor 30 calculates, as the cache usage percentage, the percentage of the number of the segments used or reserved at that moment in the number of all segments that form the entire journal area 24J in the cache memory 24. Then the primary microprocessor 30 writes the thus obtained calculation result in the shared memory 23A (23B) (SP2).

Next, the primary microprocessor 30 creates a journal 40 for the write data given from the host computer 7, and stores the thus created journal 40 in each of the storage areas for the data area 24D and the journal area 24J reserved in step SP1 (SP3).

After that, the primary microprocessor 30 writes the write data included in the journal 40 stored in the data area 24D in the cache memory 24 at a relevant address position in a relevant data volume 41 (Fig. 3) provided in the first storage apparatus 3 (SP4), then erases the journal 40 from the data area 24D in the cache memory 24 and releases the storage area in the data area 24D where the journal 40 had been stored (SP5).

Next, the primary microprocessor 30 checks whether or not the cache usage percentage calculated in step SP2 exceeds the journal volume activation threshold value stored in advance in the shared memory 23A (23B) (SP6). If the result is "no," the primary microprocessor 30 terminates the write processing.

Meanwhile, if the result is "yes," the primary microprocessor 30 saves, in the journal volume 42, the journal 40 stored in the journal area 24J in the cache memory 24 in step SP3 (SP7).

The primary microprocessor 30 also erases the journal 40 from the journal area 24J in the cache memory 24 and releases the storage area of the journal area 24J where the journal 40 had been stored (SP8), then terminates the write processing.

Fig. 9 shows the specific content of processing executed by the primary microprocessor 30 when receiving a journal 40 read request sent from the second storage apparatus 5. The primary microprocessor 30 executes "primary-side remote copy processing" shown in Fig. 9 according to a relevant control program stored in the memory 31 (Fig. 2).

More specifically, the primary microprocessor 30, after receiving, from the second storage apparatus 5, a request that the journal 40 with a designated sequence number is read, commences "journal transfer processing," and first checks whether or not the designated journal 40 exists in the cache memory 24 (SP10).

If the result is "yes," the primary microprocessor 30 proceeds to step SP12. If the result is "no," the primary microprocessor 30 reads the designated journal 40 from the relevant journal volume 42 and stores the journal 40 in the journal area 24J in the cache memory 24 (SP11).

After that, the primary microprocessor 30 reads the designated journal 40 from the cache memory 24 and sends, to the second storage apparatus 5, the journal 40 with a response message to the read request (SP12).

The primary microprocessor 30 erases, after receiving a notice from the second storage apparatus 5 that write data copy based on the journal 40 is finished (hereinafter referred to as a "copy completion notice"), the journal 40 from the journal area 24J in the cache memory 24, releases the storage area in the journal area 24J where the journal 40 had been stored (SP13), and terminates the primary-side remote copy processing.

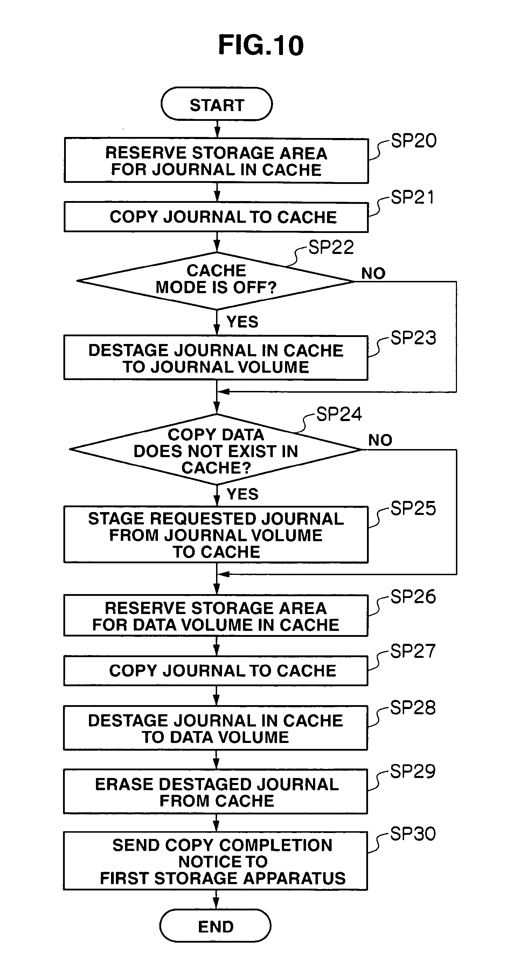

Fig. 10 shows the specific content of processing executed by the microprocessor 30 (hereinafter referred to as the secondary microprocessor 30) in each channel adapter 21A (21 B) in the second storage apparatus 5 that received a journal 40 transferred from the first storage apparatus 3. The secondary microprocessor 30 executes the "secondary-side remote copy processing" shown in Fig. 10 according to a relevant control program stored in the memory 31 (Fig. 2).

More specifically, the secondary microprocessor 30 commences the secondary-side remote copy processing after receiving the journal 40 from the first storage apparatus 3, and first reserves, in the journal area 24J in the cache memory 24, a storage area for storing the above received journal 40 (SP20).

After that, the secondary microprocessor 30 stores the above received journal 40 in the storage area reserved in step SP20 (SP21), and checks whether or not the above described cache mode is currently off (SP22).

If the result is "no," the secondary microprocessor 30 proceeds to step SP24. Meanwhile, if the result is "yes," the secondary microprocessor 30 saves, in the journal volume 42, the journal 40 stored in the cache memory 24 in step SP21. The secondary microprocessor 30 also erases the journal 40 from the journal area 24J in the cache memory 24 and releases the storage area in the journal area 24J where the journal 40 has been stored (SP23).

After that, the secondary microprocessor 30 checks whether or not the journal 40 to be reflected in the data volume 41 exists in the data area 24D in the cache memory 24 (SP24). If the result is "yes," the secondary microprocessor 30 proceeds to step SP26. Meanwhile, if the result is "no," the secondary microprocessor 30 reads, from the relevant journal volume 42, the journal 40 to be next reflected in the data volume 41 according to the sequence number of the journal 40, and stores that journal 40 in the cache memory 41 (SP25).

Then the secondary microprocessor 30 reserves, in the data area 24D in the cache memory 24, a storage area for storing the journal 40 to be next reflected in the data volume 41 (SP26), and copies, to that storage area, the journal 40 stored at that moment in the journal area 24J in the cache memory 24 (SP27).

After that, the secondary microprocessor 30 reflects, in the relevant data volume 41 in the second storage apparatus 5, the journal 40 copied to the data area 24D in the cache memory 24 in step SP27 (SP28), then erases the journal 40 from the journal area 24J in the cache memory 24 and releases the storage area in the journal area 24J where the journal 40 has been stored (SP29).

The secondary microprocessor 30 sends the above mentioned copy completion notice for the journal 40 (see step SP13 in Fig. 9) to the first storage apparatus 3 (SP30), and terminates the secondary-side remote copy processing.

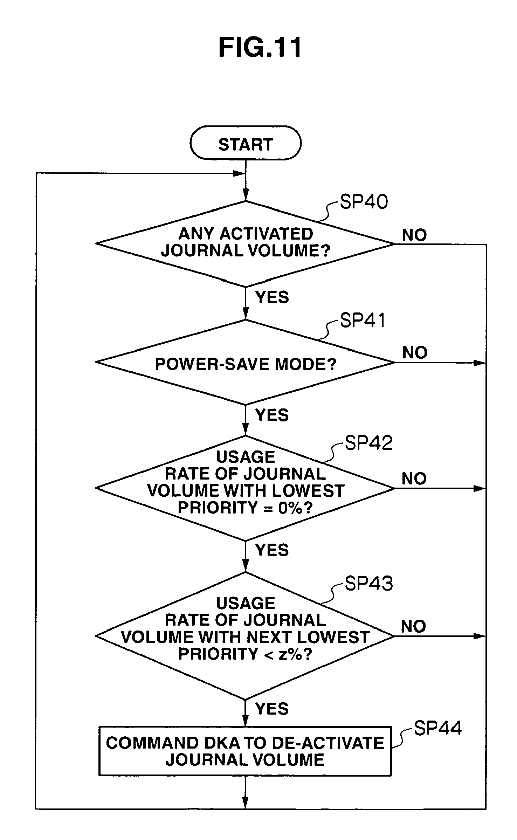

Meanwhile, the primary microprocessor 30 executes "journal volume de-activation processing" shown in Fig. 11 according to the relevant control program stored in the memory 31, in parallel to the above described write processing in Fig. 7 and the above described primary-side remote copy processing in Fig. 9, thereby turning off the disk devices 10, in the disk devices 10 (Fig. 1) managed by the primary microprocessor 30, that provide a storage area for an unused journal volume 42.

More specifically, the primary microprocessor 30 commences, after the first storage apparatus 3 is turned on, the journal volume de-activation processing, and first checks whether or not any journal volume 42 is activated (SP40).

If the result is "no," the primary microprocessor 30 waits until a "yes" result is acquired in step SP40. After a "yes" result is acquired in step SP40, the primary microprocessor 30 checks whether or not the cache mode is set as the remote copy operation mode, and if the power-save mode is set (SP41).

If the result is "no," the primary microprocessor 30 returns to step SP40. Meanwhile, if the result is "yes," the primary microprocessor 30 checks whether or not the usage percentage of the journal volume 42 with the lowest activation priority in the currently activated journal volumes 42 is 0% (SP42).

If the result is "no," the primary microprocessor 30 returns to step SP40. Meanwhile, if the result is "yes," the primary microprocessor 30 checks whether or not the journal volume usage percentage of the journal volume 42 with the activation priority one level higher than the volume with the lowest activation priority is smaller than a predetermined threshold value (the value represented as "z (%)" in Fig. 6, hereinafter referred to as a "journal volume de-activation threshold value") (SP43).

If the result is "no," the primary microprocessor 30 returns to step SP40. Meanwhile, if the result is "yes," the primary microprocessor 30 commands the relevant disk adapter 44 to turn off the disk drive 10 that provides the storage area for the journal volume 42 with the lowest activation priority in the currently activated journal volumes 42 (SP44).

After that, the primary microprocessor 30 returns to step SP40 and repeats the above steps (SP40-SP44-SP40).

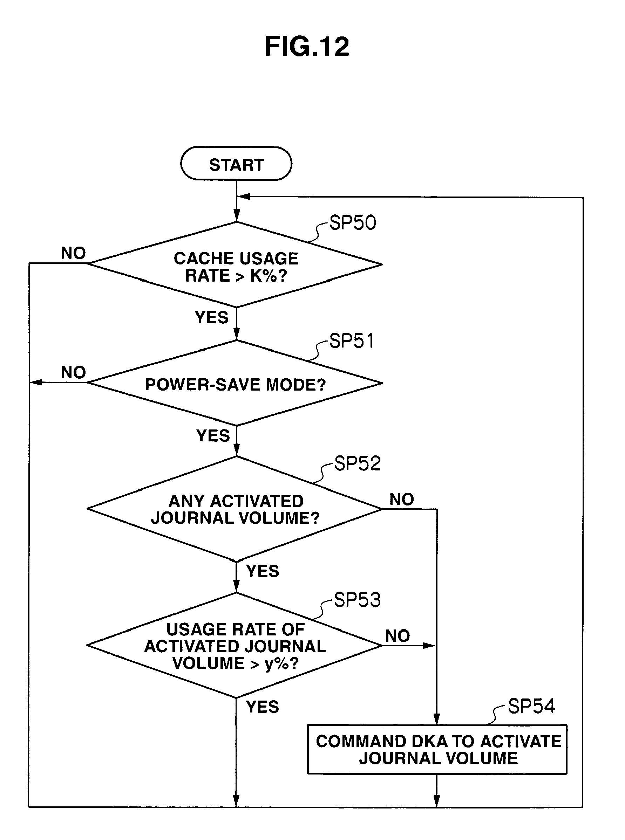

In this embodiment, as shown in Fig. 6, the journal volume de-activation threshold value ("z(%)") in step SP43 is set to be lower than the next journal volume activation threshold value ("y (%)"). That is because, if the journal volume usage percentage of the journal volume 42 with the second lowest activation priority in the currently activated journal volumes 42 is the same or almost the same as the next journal volume activation threshold value, even if the journal volume with the lowest activation priority is de-activated, that journal volume 42 may be activated immediately after being de-activated due to "journal volume activation processing," which will be described later with reference to Fig. 12. Therefore, in this embodiment, the journal volume de-activation threshold value is set to be lower, to some extent, than the next journal volume activation threshold value to prevent such an unnecessary operation from taking place.

Meanwhile, the primary microprocessor 30 executes, according to a relevant control program stored in the memory 31, the journal volume activation processing shown in Fig. 12 during the above described write processing in Fig. 7, the primary-side remote copy processing in Fig. 9, and the journal volume de-activation processing in Fig. 11, and turns on the disk device 10 that provides the storage area for the necessary journal volume 42 in the disk devices 10 managed by the primary microprocessor 30.

More specifically, the primary microprocessor 30 commences, after the first storage apparatus 3 is turned on, the journal volume activation processing. The primary microprocessor 30 first reads the cache usage percentage from the shared memory 23A (23B) (see step SP2 in Fig. 7), and checks whether or not the cache usage percentage exceeds a preset threshold value (hereinafter referred to as a "cache usage percentage threshold value") (SP50).

If the result is "no," the primary microprocessor 30 waits until a "yes" result is acquired in the step SP50. Meanwhile, if the result is "yes" in step SP50, the primary microprocessor 30 checks whether or not the cache mode is set as the remote copy operation mode and if the power-save mode is set (SP51).

If the result is "no," the primary microprocessor 30 returns to step SP50. Meanwhile, if the result is "yes," the primary microprocessor 30 checks whether or not any journal volume 42 is currently activated (SP52).

A "no" result in the above check means that until that moment no journals 40 have been saved in the journal volumes 42, and therefore, no journal volumes 42 have been activated. Accordingly, the primary microprocessor 30 then commands the relevant disk adapter 25A (25B) (Fig. 1) to activate the journal volume 42 with the highest activation priority. After that, the primary microprocessor 30 returns to step SP50 and repeats the above steps (SP50-SP54-SP50).

Meanwhile, a "yes" result in step SP52 means that a journal 40 has already been saved in a journal volume 42, so at least one journal volume 42 is currently activated. Accordingly, the primary microprocessor 30 then commands the relevant disk adapter 25A (25B) to activate the journal volume 42 with the activation priority one level lower than the journal volume 42 with the lowest activation priority in the currently activated journal volumes 42. After that, the primary microprocessor 30 returns to step SP50 and repeats the above steps (SP50-SP54-SP50).

### 1-3. Advantage of this embodiment

As described above, in this storage system 1, when the cache mode is set as the remote copy operation mode and the power-save mode is set as the power control mode, the first storage apparatus 3, which is the primary side, turns off disk devices 10 that provide a storage area for unnecessary journal volumes 42, so the power consumption can be effectively reduced. In addition, by turning off those disk devices 10, heat generation from the first storage apparatus 3 can be reduced and the life span of the disk device 10 can be extended.

### 2. Second embodiment

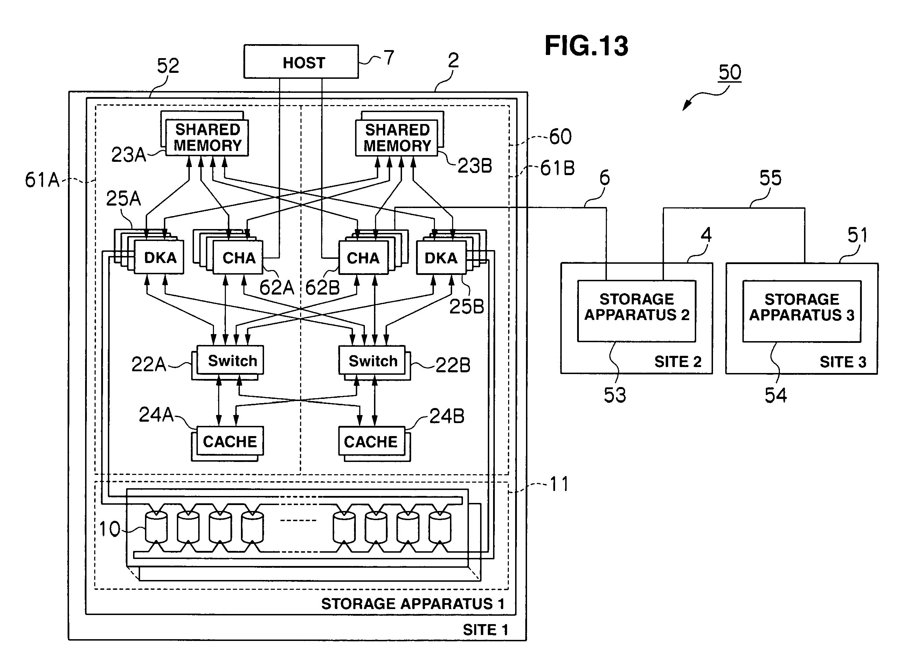

Fig. 13 shows a storage system 50 in the second embodiment, where the parts corresponding to the parts in Fig. 1 are provided with the same reference numerals. The storage system 50 includes first to third storage apparatuses 52 to 54 respectively in first to third sites 2, 4, and 51. The first storage apparatus 52 is connected to the second storage apparatus 53 and the second storage apparatus 53 is connected to the third storage apparatus 54 respectively via communication lines 6 and 55 such as a SAN, LAN, or the Internet.

Each of the first and second storage apparatuses 52 and 53 has a disk controller 60 including 0^{th} and 1^{st} control units 61A and 61B. The control units 61A and 61B have the same configuration as those in the first storage apparatus 3 (Fig. 1) in the first embodiment except that the content of the processing executed by each channel adapter 62A (62B) during the remote copy processing is different. The third storage apparatus 54 has the same configuration as the second storage apparatus 5 (Fig. 1) in the first embodiment.

In the storage system 50, when a write request and write data are given from the host computer 7 to the first storage apparatus 52, the write data is written to a relevant data volume 41 (Fig. 3). The write data is also transferred to the second storage apparatus 53 while the write data is written to the data volume 41 in the first storage apparatus 52.

The second storage apparatus 53 creates, in the cache memory 24 (24A/24B), a journal (or more than one journals) for the write data transferred from the first storage apparatus 52, reflects the thus created journal 40 (Fig. 3) in a relevant data volume 41, and stores the journal 40 in a journal volume 42 (Fig. 3). After that, the second storage apparatus 53 reads, according to a read request given from the third storage apparatus 54, the journal 40 stored in the journal volume 42, and transfers the journal 40 to the third storage apparatus 54.

The third storage apparatus 54 stores the journal 40 transferred from the second storage apparatus 53 in a journal volume 52 via the cache memory 24, reads the journal 40 sequentially from the journal volume 42 according to the sequence number provided to the journal 40, and reflects the above read journals 40 in the relevant data volume 41 in the third storage apparatus 54.

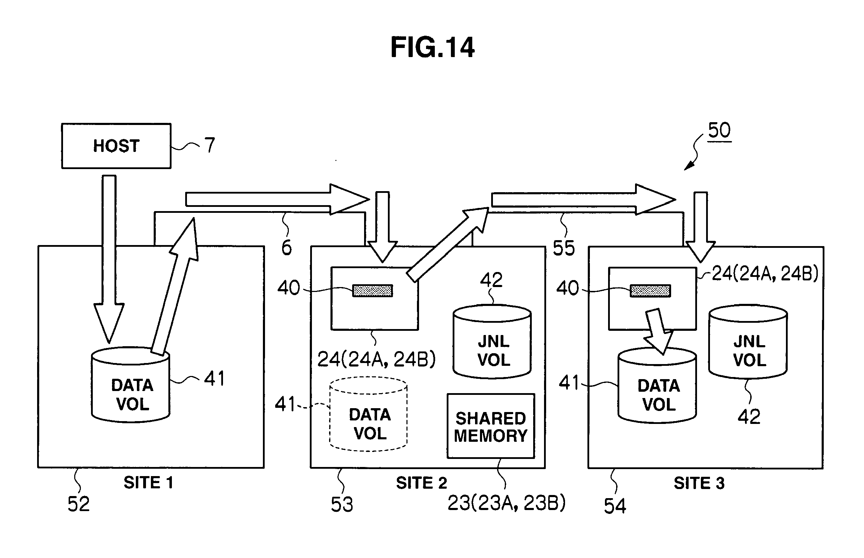

In this storage system 50 too, the "cache mode" remote copy operation mode is provided. If the cache mode is set, as shown in Fig. 14, the second storage apparatus 53 does not store the above created journal 40 in a journal volume 42, but instead has the cache memory 24 hold the journal, reads the relevant journal 40 from the cache memory 24 in response to a read request from the third storage apparatus 54, and transfers the journal 40 to the third storage apparatus 54. The third storage apparatus 54 holds the journal 40 transferred from the second storage apparatus 53 in the cache memory 24 and reflects the journal 40 in the data volume 41 in the third storage apparatus 54 according to the sequence number.

As a result, in the storage system 50 in this embodiment, the data volume 41 in the second storage apparatus 53 is not used during remote copy processing if the cache mode is set as the remote copy operation mode. Therefore, in the storage system 50, the data volume 41 in the second storage apparatus 53 is de-activated during regular operation.

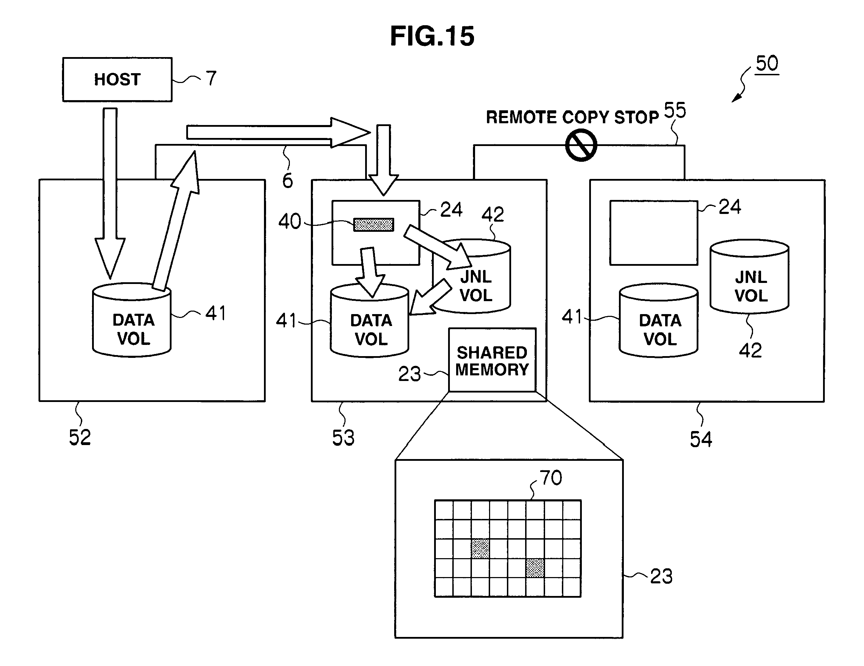

Meanwhile, in the storage system 50, if, as shown in Fig. 15, a line failure or similar occurs in the communication line 55 between the second and third storage apparatuses 53 and 54 and journals 40 become unable to be transferred from the second storage apparatus 53 to the third storage apparatus 54, the second storage apparatus 53 sequentially saves created journals 40 in journal volumes 42, activates a relevant data volume 41, and sequentially reflects the journals 40 saved in the journal volumes 42 in that data volume 41. The second storage apparatus 53 also sequentially reads the journals 40 saved in the journal volumes 41 and reflects the journals in the data volume 41, and manages, with the difference management bitmap 70 held in the shared memory 23(23A/23B), the position in the data volume 41 where the journals 40 are reflected.

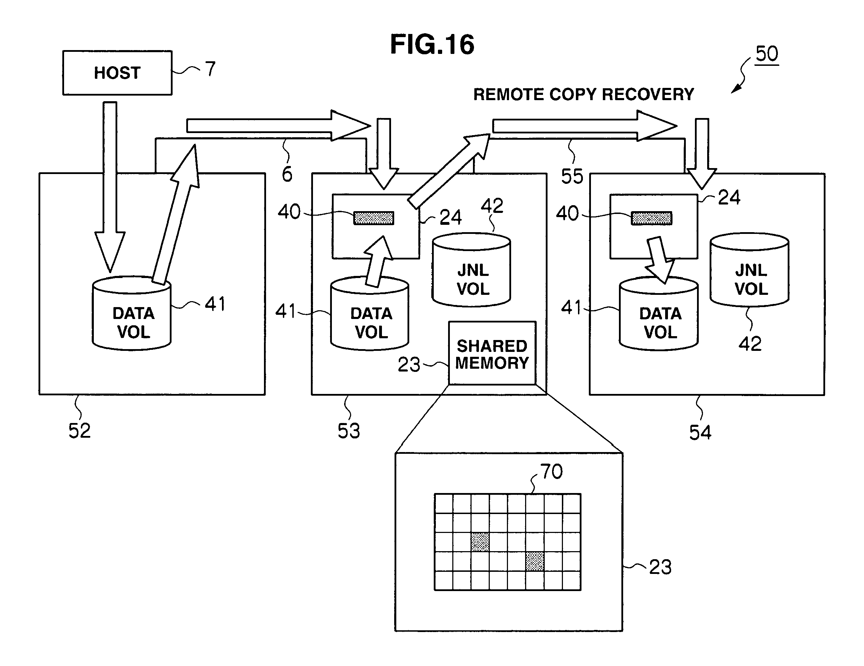

After the communication line 55 between the second and third storage apparatuses 53 and 54 is restored and the remote copy processing between the second and third storage apparatuses 53 and 54 is restarted, as shown in Fig. 16, the second storage apparatus 53 sends, to the third storage apparatus 54, based on the difference management bitmap 70 stored in the shared memory 23, the write data that has been saved in the data volume 41 in the second storage apparatus 53.

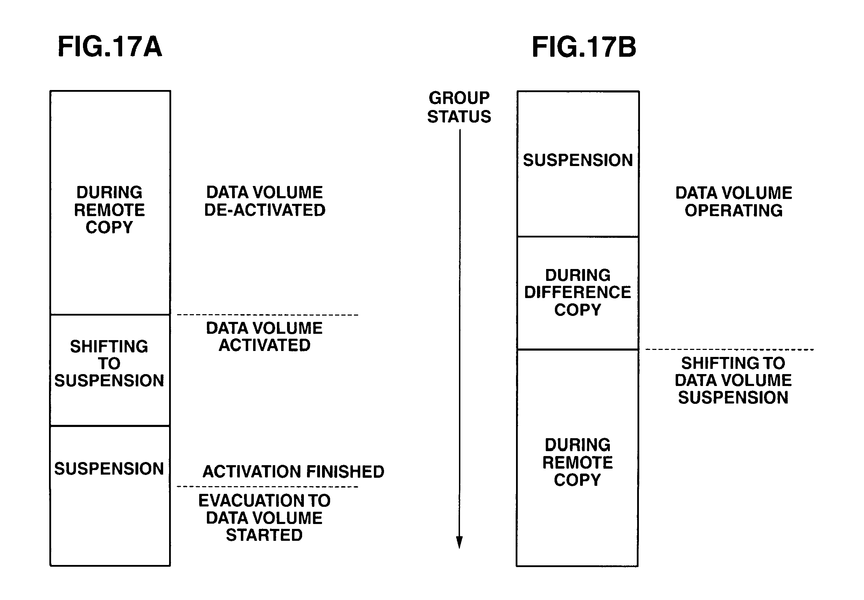

Fig. 17 shows the relationship between the state of a single data volume 41 where the above described remote copy is executed, or a consistency group where the above described remote copy is executed on data volumes 4,1 included in the group at the same time, and the state of a data volume 41 in the second storage apparatus. The "consistency group" is a group of data volumes 41 that store interrelated data, such as index data for a database, the content of the database, and log data.

As shown in Fig. 17(A), when remote copy is regularly executed between the second and third storage apparatuses 53 and 54, the data volumes 41 in the second storage apparatus 53 are de-activated ("DURING REMOTE COPY" in Fig. 17(A)).

After that, if a line failure or similar occurs in the communication line 55 between the second and third storage apparatuses 53 and 54 and journals 40 become unable to be transferred from the second storage apparatus 53 to the third storage apparatus 54, a relevant data volume 41 is activated ("SHIFTING TO SUSPENSION" in Fig. 17(A)). When doing so, if the remote copy target is a consistency group, all data volumes 41 included in that consistency group in the second storage apparatus 53 are activated.

After activation of the relevant data volume(s) 41 in the second storage apparatus 53 is finished, data save to the data volume(s) 41 (reflection of journal 40 to the data volume(s) 41) commences ("SUSPENSION" in Fig. 17(A)).

As shown in Fig. 17(B), data save of write data to the relevant data volume(s) 41 in the second storage apparatus 53 is continued until the journals 40 become able to be transferred again from the second storage apparatus 53 to the third storage apparatus 54 ("SUSPENSION" in Fig. 17(B)).

After the journals 40 become able to be transferred again from the second storage apparatus 53 to the third storage apparatus 54, the write data saved in the data volume 41 in the second storage apparatus 53 is transferred as difference data to the third storage apparatus 54, and copied to a relevant data volume(s) 41 in the third storage apparatus 54 ("DIFFERENCE DATA" in Fig. 17(B)). If the remote copy target is a consistency group, the above described difference copy is executed for all write data saved in the data volumes corresponding to the consistency group.

After all write data saved in the data volume(s) 41 in the second storage apparatus 53 is completely copied to the corresponding data volume(s) 41 in the third storage apparatus 54, all relevant data volumes 41 in the second storage apparatus 53 are de-activated ("DURING REMOTE COPY" in Fig. 17(B)).

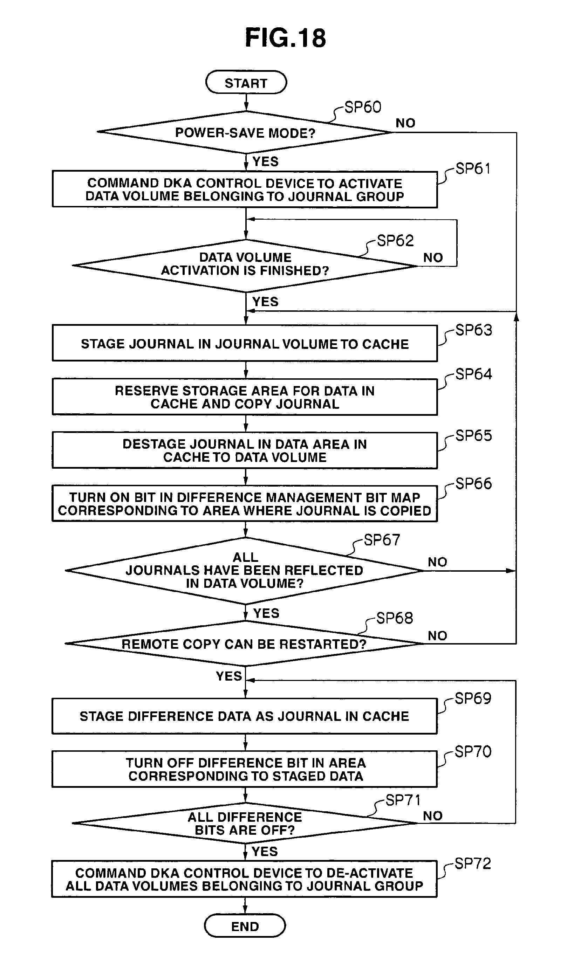

Fig. 18 shows the specific content of processing relating to the above described de-activation/activation of the data volumes 41 in the second storage apparatus 53, processing executed by the microprocessor 30 (see Fig. 2; hereinafter referred to as an "intermediate microprocessor 30") in each channel adapter 62 (62A , 62B) in the second storage apparatus 53. The intermediate microprocessor 30 executes "data volume de-activation/activation processing" shown in Fig. 18 according to a relevant control program stored in the memory 31 (Fig. 2).

More specifically, when remote copy is interrupted by a line failure or similar in the communication line 55 (i.e., when journals 40 become unable to be transferred to the third storage apparatus 54), the intermediate microprocessor 30 commences the data volume de-activation/activation processing, and first checks whether or not the power-save mode is set (SP60).

If the result is "no," the intermediate microprocessor 30 proceeds to step SP63. Meanwhile, if the result is "yes," the intermediate microprocessor 30 commands a relevant disk adapter 25A (25B) (Fig. 13) to activate all relevant data volumes 41 associated with the interrupted remote copy (SP61).

Then the intermediate microprocessor 30 waits until all relevant data volumes 41 are activated (SP62). After all those data volumes 41 are activated, the intermediate microprocessor 30 reads, from the journal volume 42 to the cache memory 24, the journal 40 with the oldest sequence number in the journals 40 saved in the journal volume 42 after the above interruption in the remote copy (SP63).

After that, the intermediate microprocessor 30 reserves a storage area in the data area 24D (Fig. 8) in the cache memory 24, and stores, in that storage area, the journal 40 read from the journal volume 42 in step SP63 (SP64).

Next, the intermediate microprocessor 30 reflects, in the relevant data volume 41, the journal 40 stored in the data area 24D in the cache memory 24 in step SP64 (SP65), then turns on (i.e., sets to "1") the bits corresponding to the storage area where the journal 40 in the data volume 41 is reflected in the bits stored in the difference management bitmap 70 stored in the shared memory 23 (SP66).

After that, the intermediate microprocessor 30 checks whether or not all journals 40 saved in the journal volumes 42 are respectively reflected in the relevant data volume 41 (SP67). If the result is "no," the intermediate microprocessor 30 returns to step SP63 and repeats the above steps (SP63-SP67-SP63).

Meanwhile, if the result is "yes," the intermediate microprocessor 30 checks whether or not remote copy has become able to be resumed (SP68). If the result is "no," the intermediate microprocessor 30 returns to step SP63 and repeats the above steps (SP63-SP68-SP63).

If the result in step SP68 is "yes," the intermediate microprocessor 30 refers to the difference management bitmap 70 held in the shared memory 23, reads difference data for predetermined units from the relevant data volume 41, creates a journal for the difference data, and stores the journal in the journal area 24J (Fig. 8) in the cache memory 24.

The intermediate microprocessor 30 also turns off (i.e., sets to "0") the bits in the difference management bitmap 70 corresponding to the difference data (SP70), and checks whether or not all bits in the difference management bitmap 70 are off (SP71).

If the result is "no," the intermediate microprocessor 30 returns to step SP69 and repeats the above steps until all the bits in the difference management bitmap 70 are off (SP69-SP71-SP69).

If all the bits in the difference management bitmap 70 are off and the result in step SP71 is accordingly "yes," the intermediate microprocessor 30 commands the disk adapter 25A (25B), which was commanded to activate the relevant data volume 41 in the step SP61, to de-activate that data volume 41 (SP72), and terminates the data volume de-activation/activation processing.

As described above, in the storage system 50 in this embodiment, the second storage apparatus 53 provided in the second site 4, which is an intermediate site, turns off disk devices 10 that provide a storage area for unnecessary data volumes 41, and therefore, the power consumption can be effectively reduced. In addition, by turning off those disk devices 10, heat generation from the first storage apparatus 3 can be reduced, and the life span of the disk device 10 can be extended.

### 3. Other embodiments

In the above described first embodiment, the microprocessor 30 in the channel adapter 21A (21B) functions as a journal creation unit for creating journals 40, a transfer unit for transferring, to the second storage apparatus 5, journals 40 stored in the cache memory 24 or saved in the journal volumes 42, and a journal volume de-activation/activation unit for controlling de-activation/activation of the journal volumes 42. However, the invention is not limited to the above embodiment, and may be provided with other hardware that has any of those functions.

In the above described second embodiment, the microprocessor 30 in the channel adapter 62A (62B) in the second storage apparatus 53 functions as a control unit for saving, when necessary, write data transferred from the first storage apparatus 52 in a relevant data volume 41 in the second storage apparatus 53, and for transferring, to the third storage apparatus 54, the write data held in the cache memory 24 or saved in a data volume 41. However, the invention is not limited to that embodiment, and may be provided with other hardware that has any of those functions.

In the above described second embodiment, only unnecessary data volumes 41 are de-activated in the second storage apparatus 53. However, the invention is not limited to that embodiment, and, as in the first embodiment, unnecessary journal volumes 42 may also be de-activated. More specifically, the microprocessor 30 in each channel adapter 62A (62B) in the second storage apparatus 53 may control de-activation/activation of the journal volumes 42 by executing the journal volume de-activation processing described above with reference to Fig. 11 or the journal volume activation processing described above with reference to Fig. 12.

The invention may be used in storage systems having various configurations that include a storage apparatus provided with a remote copy function.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A storage apparatus for providing a host computer with a data volume data is read from or written to, and writing write data to the data volume in response to a request from the host computer,
the apparatus comprising:
a journal creation unit for creating, based on the write data, a journal that contains data volume modification history information;
cache memory for temporarily holding the journal;
a journal volume the journal is saved in when necessary;
a transfer unit for transferring, to an external storage device, the journal stored in the cache memory or saved in the journal volume; and
a journal volume de-activation/activation unit for controlling de-activation/activation of the journal volume,
wherein the journal volume de-activation/activation unit monitors a cache memory usage percentage for the journal, the journal volume is de-activated if the cache memory usage percentage is not more than a predetermined first threshold value, and the journal volume is activated if the cache memory usage percentage exceeds the first threshold value.

2. The storage apparatus according to claim 1, comprising plural journal volumes, to which priority is given in advance, wherein the journal volume de-activation/activation unit monitors the usage percentage of a journal volume with the lowest priority in the activated journal volumes, and activates a journal volume with the priority one level lower than the journal volume with the lowest priority if the journal volume usage percentage exceeds a predetermined second threshold value.

3. The storage apparatus according to claim 2, comprising plural journal volumes, to which priority is given in advance, wherein if the usage percentage of the journal volume with the lowest priority in the activated journal volumes is 0% and the usage percentage of the journal volume with the priority one level higher than the journal volume with the lowest priority is lower than a predetermined third threshold value, the journal volume de-activation/activation unit de-activates the journal volume with the lowest priority in the activated journal volumes.

4. The storage apparatus according to claim 3, wherein the third threshold value is set to be lower than the second threshold value.

5. A method for controlling a storage apparatus for providing a host computer with a data volume data is read from or written to, and writing write data to the data volume in response to a request from the host computer,
the method comprising:
a first step of creating, based on the write data, a journal that contains data volume modification history information;
a second step of having cache memory hold the thus created journal or saving the journal in a journal volume when necessary; and
a third step of transferring, to an external storage device, the journal held by the cache memory or saved in the journal volume,
wherein a cache memory usage percentage for the journal is monitored during the above first to third steps, and the journal volume is de-activated if the cache memory usage percentage is not more than a predetermined first threshold value, and activated if the cache memory usage percentage exceeds the first threshold value.

6. The control method according to claim 5, wherein the storage apparatus includes plural journal volumes, to which priority is given in advance, the usage percentage of the journal volume with the lowest priority in the activated journal volumes is monitored, and if the journal volume usage percentage exceeds a predetermined second threshold value, the journal volume with the priority one level lower than the journal volume with the lowest priority is activated.

7. The control method according to claim 6, wherein the storage apparatus includes plural journal volumes, to which priority is given in advance, and if the usage percentage of the journal volume with the lowest priority in the activated journal volumes is 0% and the usage percentage of the journal volume with the priority one level higher than the journal volume with the lowest priority is lower than a predetermined third threshold value, the journal volume with the lowest priority is de-activated.

8. The control method according to claim 7, wherein the third threshold value is set to be lower than the second threshold value.

9. A storage system in which write data written from a host computer to a first data volume in a first storage apparatus is transferred to a third storage apparatus via a second storage apparatus, and is copied to a corresponding third data volume in the third storage apparatus,
the second storage apparatus comprising:
cache memory for temporarily holding the write data transferred from the first storage apparatus,
a second data volume provided to correspond to the first volume,
and a control unit for saving the write data in the corresponding second data volume when necessary, and transferring, to the third storage apparatus, the write data held by the cache memory or saved in the second data volume,
wherein the control unit de-activates the second data volume during power-save mode; and if the write data becomes unable to be transferred from the second storage apparatus to the third storage apparatus, the control unit activates the corresponding second data volume and saves, in the second data volume, the write data transferred from the first storage apparatus, and after the write data becomes able to be transferred from the second storage apparatus to the third storage apparatus, the control unit transfers the write data saved in the second data volume to the third storage apparatus and de-activates the second data volume after all the write data in the second data volume is sent to the third storage apparatus.
